Europäisches Patentamt

European Patent Office

Office européen des brevets

(19)

(11) Veröffentlichungsnummer: **0 222 767**

**B1**

(12) **EUROPÄISCHE PATENTSCHRIFT**

(45) Veröffentlichungstag der Patentschrift: **14.11.90**

(21) Anmeldenummer: **85904136.0**

(22) Anmeldetag: **06.08.85**

(86) Internationale Anmeldenummer:
**PCT/IT85/00028**

(87) Internationale Veröffentlichungsnummer:
**WO 86/01198 27.02.86 Gazette 86/05**

(51) Int. Cl.⁵: **C 05 F 9/02**

(54) BELÜFTUNGSVORRICHTUNG FÜR KOMPOSTIERUNGSBECKEN VON BIOMASSEN.

(30) Priorität: **07.08.84 IT 4870384**

(43) Veröffentlichungstag der Anmeldung:
**27.05.87 Patentblatt 87/22**

(45) Bekanntmachung des Hinweises auf die
Patenterteilung:
**14.11.90 Patentblatt 90/46**

(84) Benannte Vertragsstaaten:
**AT BE CH DE FR GB LI LU NL SE**

(56) Entgegenhaltungen:
**EP-A-0 028 194
DE-A-2 415 067
GB-A-2 060 596
LU-A- 49 649
US-A-2 890 548**

(73) Patentinhaber: **SORAIN CECCHINI S.p.A.
Via Campobello, 41
Pomezia I-Rome (IT)**

(72) Erfinder: **CERRONI, Manlio
Viale Poggio Fiorito, 63
I-00144 Roma (IT)**

(74) Vertreter: **Sneider, Massimo
Lenzi & C. Via Lucania, 13
I-00187 Roma (IT)**

Courier Press, Leamington Spa, England.

## Beschreibung

Um für die Landwirtschaft nützliche Dünger zu erhalten ist es bekannt, dass die wirksamste und zugleich wirschaftlichste Methode für die Wiederverwertung der Biomassen in der aeroben Biodegradation mittels Mikroorganismen besteht.

Gemeinsam ist allen Methoden und Versuchsgeräten die Notwendigkeit, die Biomasse zwecks Entwicklung der aeroben Bakterienflora zu belüften, welche in der Lage ist die Biodegradation in relativ kurze Zeit und ohne Emanation übler Gerüche (Fäulnisanzeichen) zu bewirken.

Abgesehen von der für den Prozess erforderlichen Luftmenge und von der Zweckmässigkeit dieselbe einzublasen oder abzusaugen, ist kein bekanntes System in der Lage das zu gewährleisten, was grundlegend ist, u.zw. eine angemessene Verteilung der Luft in der Masse und eine Stetigkeit in der Zeit, insofern zur Zeit das Belüftungssystem nach kurzen Zeitabschnitten sich verschliesst und der Biodegradationsprozess hoffnungslos zum Stillstand kommt ohne jegliche Möglichkeit denselben wegen der Gegenwert einer beträchtlichen Materialmasse zu reaktivieren, welche vorallem bei den automatischen System nicht entfernt werden kann.

Die normalerweise angewandten Belüftungsanlagen sind am Grund oder Fussboden die Digestors angebracht und können in zwei grundlegende Systeme gruppiert werden.

Das erste von diesen Systemen ist aus einem seitlichen Kollektor oder Sammler an Becken zusammengesetzt, in den Luft eingeblasen oder abgesaugt wird, und welcher an ein Netz von Leitungen verbunden ist, welche das Becken durchqueren. Jede Leitung ist mit Mündungen oder Düsen versehen, von denen die Luft in die Masse eingeführt oder aus dieser abgeführt wird.

Das zweite System ist aus Querrinnen zusammengesetzt, welche aus dem Fussboden des Beckens herausgearbeitet und mit Ziegeln überdeckt sind, welche für den Durchtritt der Luft mit Schlitzten versehen sind, indem der Durchtritt des Materials unterbunden ist. Diese Querrinnen sind untereinander mit einer Längsrinne verbunden, welche dazu vorgesehen ist, um die periodische Spülung aller Rinnen mit der Förderung des Wasser zu einem Sammelschacht zu gestatten.

Beide von diesen grundlegenden Systemen weisen bemerkenswerte Übelstände auf, u.zw.:

a) Die biologische Masse in Behandlung hat von Stelle zu Stelle eine veränderliche Konsistenz und Luftdurchlässigkeit. In der Tat in einem Digestor mit kontinuierlichem Prozess, wie dies bei mittleren und hohen Produktionen zutrifft, hat man frisches Material, Material in Reifephase und bereits reifes Material, und jedes dieser Materialien weist eine unterschiedliche Luftdurchlässigkeit auf, weshalb angesichts der unterschiedlichen Beschaffenheit das Materials die in eine Leitung eingebrachte Luft bestrebt sein wird aus jenen Öffnungen auszutreten (oder einzutreten), an denen sie einen geringeren Widerstand antrifft. Dasselbe kann man hinsichtliche des Rinnensystems behaupten mit dem erschwerendem Umstand der Unmöglichkeit Regelschieber zwischenzuschalten.

b) Die zu behandelnde biologische Masse muss immer eine sehr feuchte Masse sein (mit mehr als 50-prozentiger Feuchtigkeit), damit sich eine aerobe Flora tatsächlich entwickeln kann. Es ereignet sich somit eine bemerkenswerte Entwässerung gegen untereren Schichten zu, welche bestebt sind sich am Boden des Digestors zu verdichten unter Bildung einer undurchlässigen oder schwierig durchlässigen Schicht, welche von den mechanischen Rührmitteln nicht beseitigt werden kann, da diese aus naheliegenden Gründen mit einem gewissen, wenn auch geringstem Abstand vom Boden vorbeistreichen müssen. Diese nach und nach undurchlässig werdende Bodenschicht stellt sich im allgemeinen einige Monate nach Ingangsetzen der Anlage ein und ist durch die Gegenwart von kolloidalen Stoffen verstärkt, welche sind während des Prozesses bilden. Dieser Übelstand setzt die Anlage normalerweise ausser Berieb und nötigt gegenwärtig zur Entleerung des Beckens sowie zur Reinigung dessen Bodens. Eine derartige Handlung ist jedoch bei Industrieanlagen mit kontinuirlichem Arbeitskreislauf undenkbar, welche einmal gefüllt niemals geleert werden sollten, da der sich dort abspielende biologische Prozess lange Zeit für seine Auslösung erfordert.

Die Entegegenhaltung GB—A—2 060 596 sieht z.B. eine oder mehrere tunnelartige Reaktionskammern vor, wobei das Material von der Eingangszone zur Ausgangszone von einem Reinigungsmittel gedrängt wird, welches dasselbe vorschiebt und danach unter Reinigung des Tunnels zur Ausgangsstelle zurückkehrt. Die Reaktionskammer ist somit eine vollkommen geschlossene Kammer mit hohen Herstellungs- und Betriebskosten und ausserdem mit der Notwendigkeit für die Extraktion der erzeugten Gase zu sorgen.

Die Entgegenhaltung LU—A—49 649 führt wie bei den anderen ähnlichen Anlagen Luft über Diffusoren ein, mit ausserdem einem Dreiwegeventil, welches die Funktion hat die Richtung des Luftstromes umzukehren. Eine derartige Lösung löst jedoch nicht das Problem der Belüftigung und beseitigt nicht die Luftdiffusoren, denn wie in diesem Schutzrecht dargelegt ist deren Beseitigung und die Inberührungsetzung der organischen Rückstande mit dem Rohr der Luft nicht einmal annehmbar. Eine Zunahme des Druckes der zugeführten Lufte würde anderseits in der Biomasse unter den Bedingungen dieses Schutzrechtes Vorzugsdurchgangskanäle der Luft bewirken.

Es ist die Aufgabe der Erfindung eine Vorrichtung zu schaffen, welche mit Sicherheit in der Lage ist den Durchtritt der Luft in der Masse in Behandlung gleichmässig und kontinuierlich zu gewährleisten, derart um zu vermeiden, dass sich der Oxydationsprozess mit der Zeit reduzieren kann, sowie Mittel vorzusehen, um die Austrittsmündungen der Luft, welche sich verstopfen könnten, gegebenenfalls auch automatische freizugeben.

Erfindungsgemäss wird diese Aufgabe bei einer Belüftungsvorrichtung für Kompostierungsbecken von Biomassen im wesentlichen durch die Merkmale gelöst, wie diese im kennzeichnenden Teil des Anspruches 1 angeführt sind.

Weitere Merkmale der Erfindung sind den Ansprüchen 1—4 zu entnehmen.

Die erfindungsgemässe Vorrichtung wird beim Lesen der nachstehenden Beschreibung einer ihrer Ausführungsform unter Bezugnahme auf die anliegende schematische Zeichnung besser zu verstehen sein. In der Zeichnung selbst zeigen:

Fig. 1 das Schema der Verteilung der Durchlassrohre der Luft;

Fig. 2 das Speise- und Steuerschema jedes Rohres.

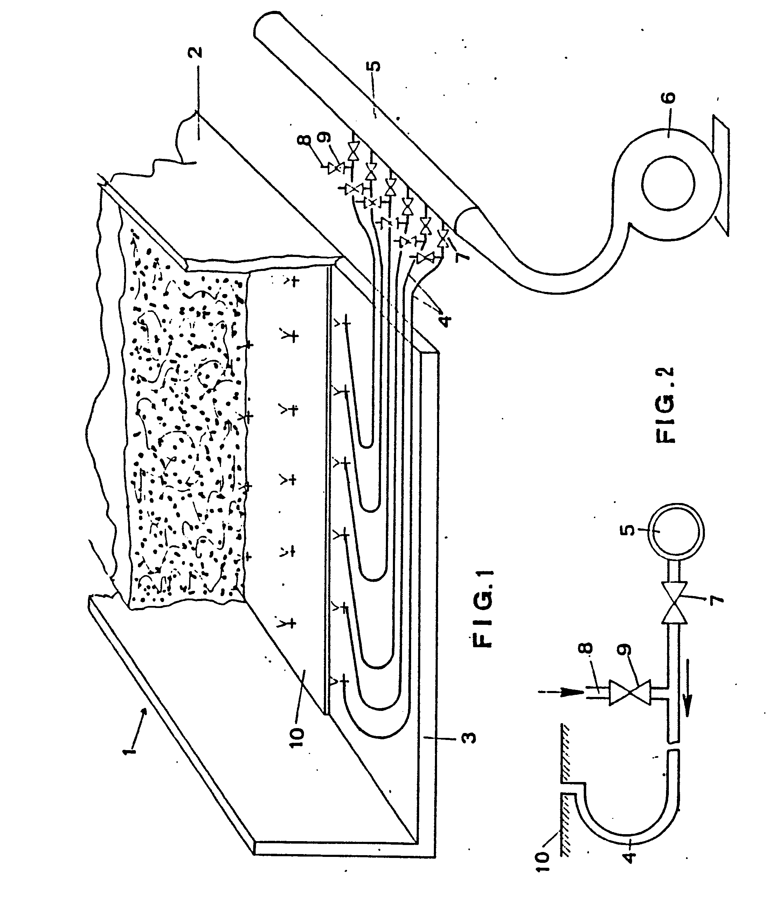

Bezugnehmend auf die Zeichnung und insbesondere auf (die ursprünglichen Blätter 4,5 sind durch die neuen Blätter 4,4a,5 zu ersetzen) Fortsetzung auf Seite 6 die Figur 1 ist am Boden 3 del Beckens 1, in dem die zu behandelnde Materialmasse 2 eingebracht ist, eine Reihe von Rohrleitungen 4 angeordnet, von denen jede unabhängig von den anderen mit einem Sammler 5 verbunden ist, durch welchen von einem beliebigen Elektroventilator 6 unter Druck versetzte Luft hindurchströmt.

Erfindungsgemäss haben alle Rohrleitungen 4 im wesentlichen die gleiche Länge, die gleiche Kurvenzahl und den gleichen Durchmesser. Bei diesen Bedingungen weisen alle Rohrleitungen 4 das gleiche Energiegefälle auf, was eines der Merkmale der Erfindung darstellt.

Wie bereits angedeutet besteht ein weiteres Merkmal der Erfindung darin, dass der Druck der Luft im Sammler 5, und somit in den Rohrleitungen 4, so beschaffen ist, dass das von den Rohrleitungen 4 dargebotene Energiegefälle bemerkenswert höher ist als das von der Luft beim Durchströmen der Biomasse begegnete Energiegefäll. In diesem Sinne vorgenommene Versuche haben bewiesen, dass das Energiegefälle in den Rohrleitungen 4 in angemessener Weise 5—20-mal, vorzugsweise 8—12-mal, höher sein sollte als das Energiegefälle, welches sich beim Durchtritt der Luft durch die Biomasse einstellt.

Wie weiters angedeutet und in der Figure 2 beispielsweise veranschaulicht ist jede Rohrleitung 4 vom Sammler 5 nur mittels eines Sperrhahnes 7 abgezweigt, derart dass es möglich ist jede Rohrleitung 4 vom Sammler 5 einzeln zu isolieren. Weiters ist jede Rohrleitung 4 stromabwärts vom Sperrhahn 7 mit einem mit Sperrventil 9 aus- gestatteten Anschluss 8 versehen, über den nach vorausgehender zweckdienlicher Schaltung der beiden Hähne 7 und 9 es möglich ist die betreffende Rohrleitung 4 mit einer Fluidquelle auch höheren Druckes als der im Sammler 5 herrschende Druck zu verbinden. Mit anderen Worten im Falle einer Verstopfung des Austrittes von einer der Rohrleitungen 4, was wegen der vorgenannten Gründe durchaus möglich ist, genügt es also — unter Einwirken auf den entsprechenden Hahn 7 — die Verbindung der genannten Rohrleitung 4 mit dem Sammler 5 zu unterbrechen und dieselbe somit zu isolieren und in dieselbe Rohrleitung 4 mittels des Abschnittes 8 und des nunmehr offenen Hahnes 9 einen Fluidimpuls unter Druck gelangen zu lassen, derart um den Widerstand der Verstopfung unter Freigabe der Rohrleitung zu überwinden. Est wird danach der normale Betrieb wiederhergestellt, indem die Rohrleitung 4 mit dem Sammler 5 nach Verschliessen des Hahnes 9 wiederverbunden wird. Es ist somit die Möglichkeit gegeben die Belüftungsanlage mit einer einfachen periodischen und regelmässigen Kontrolle des Energiegefälles in den verschiedenen Rohrleitungen 4 immer leistungsfähig zu erhalten.

Wie schon angedeutet ist ein weiterer heikliger Punkt der gegenwärtig verwendeten Anlagen die Notwendigkeit von Düsen, welche Luft in das Bett des Digestors einblasen. Wie schon erwähnt hat die vorleigende Erfindung auch diesem Übelstand Abhilfe geschaffen, insofern das Austrittsmaul der Luft in der Materialmasse von der jeweiligen Rohrleitung selbst gebildet wird, welche an der Oberfläche der Bodenplatte 10 des Beckens 1 auftaucht.

Um den unterschiedlichen Luftanforderungen zu genügen, welche sich in Abhängigkeit von Reifezustand des Materials ändern, ist vorgesehen das Becken 1 und die dazugehörigen Rohrleitungen 4 in Zonen zu unterteilen, wobei jeder Zone gegebenenfalls ein getrennter Sammler 5 zugeordnet wird, derart um so in jede Zone die erforderliche Luftmenge einsenden zu können.

Die von der vorliegenden Erfindung gebotenen Vorteile sind aus der vorstehenden Beschreibung handgreiflich. Es ist hier insbesondere hervorzuhenen, dass die Vorrichtung in ihrer Herstellung und in ihrem Betrieb äusserst einfach un wirtschaftlich ist. Sie gestattet sehr rasche Überwachungen und Eingriffe, welche geeignet sind auch robotiert zu werden, und gewährleistet in jedem Fall den Wirkungsgrad der Belüftung der Biomasse und, somit, die Regelmässigkeit und die Fortsetzung des Biodegradationsprozesses.

Die Vorrichtung wurde nur beispielsweise in nicht einzuschränkender Form beschrieben und erläutert. So wären naheliegenderweise noch alle jene Abänderungen, bzw. Varianten möglich, welche sich bei der Herstellung und der Verwendung als nützlich erweisen sollten, ohne damit vom eigentlichen in den nachstehenden Patentansprüchen angegebenen Erfindungsgedanken abzuweichen.

**Patentansprüche**

1. Belüftungsvorrichtung für Kompostierungsbecken von Biomassen, bei der eine Mehrzahl von Luftliefermäulern vorgesehen ist, dadurch gekennzeichnet, dass für jedes Luftliefermaul ein getrenntes und von den anderen unabhängiges Zuleitungsrohr (4) vorgesehen ist, dass alle Zuleitungsrohre (4) gleichen Durchmessers sind, untereinander im wesentlichen eine gleiche Länge aufweisen und eine gleiche Kurvenzahl besitzen, dass zwecks Freigabe der Austrittsmündungen jedes Zuleitungsrohr (4) mit Mitteln (8, 9) versehen ist, um in dasselbe gegebenenfalls unter hohem Druck stehendes Fluid einzublasen, wobei alle Zuleitungsrohre (4) im wesentlichen ein gleiches Energiegefälle haben und das Energiegefälle in den Zuleitungsrohren (4) 5—20-mal, vorzugsweise 8—12-mal, höher ist als das Energiegefälle, welches die Luft beim Durchströmen der Biomasse erfährt.

2. Belüftungsvorrichtung, nach Anspruch 1, dadurch gekennzeichnet, dass ein Sperrhahn (7) zur Verbindung der einzelnen Zuleitungsrohre (4) mit dem Sammler (5) vorgesehen ist.

3. Belüftungsvorrichtung, nach Anspruch 1 oder 2, dadurch gekennzeichnet, dass der Druck der Luft in den Zuleitungsrohren (4) mit beliebigen Mitteln im Sammler (5), mit dem die Zuleitungsrohre (4) verbunden sind, geregelt wird, wobei die Zuleitungsrohre (4) und gegebenenfalls der Sammler (5) je nach dem Reifezustand der Biomasse in Gruppen mit unterschliedlichen Luftdrücken und Luftvolumina unterteilt sind.

4. Belüftungsvorrichtung, nach einem oder mehreren der vorstehenden Ansprüche, dadurch gekennzeichnet, dass das Luftliefermaul vom freien Ende der einzelnen Zuleitungsrohre (4) gebildet wird, welche am Boden (3) des Beckens (1) emporsteigen.

## Revendications

1. Dispositif d'aération pour bassins de compostage de biomasses, où on a prévu plusieurs goulots de distribution d'air, caractérisé par le fait que pour chaque goulot de distribution d'air on a prévu une turbulure d'alimentation (4) séparée et indépénedante des autres. Toutes les canalisations (4) ont le même diamètre et une longueur essentiellement égale entre elles et elles possèdent le même nombre de courbes, chacune d'elles disposant de moyens (8, 9) pour y insuffler un liquide sous une pression élevée pour débloquer les orifices de sortie, toutes le canalisations (4) ayant une perte de charge que l'air subit en traversant la biomasse.

2. Dispositif d'aération, suivant le point 1, caractérisé par le fait qu'on a prévu un robinet d'arrêt (7) pour brancher les différentes canalisations (4) au collecteur (5).

3. Dispositif d'aération, suivant l'une ou plusieurs conditions précédentes, caractérisé par le fait que la pression de l'air dans les canalisations d'alimentation (4) est réglée par des moyens appropriés dans le collecteur (5) auquel les canalisations (4) sont reliées, vu que les canalisations d'alimentations (4) et éventuellement le collecteur (5) sont partagés par groupes à des pressions et des volumes d'air différents suivant l'état de maturation de la biomasse.

4. Dispositif d'aération, suivant l'une ou plusieurs conditions précédentes, caractérisé par le fait que le goulot de distribution d'air sz compose de l'extrémité libre de chaque canalisation d'alimentation (4), affleurant au fond (3) du bassin (1).

## Claims

1. Airing device for biomass composting basins with several air delivery outlets, characterized by the fact that for each air distribution outlet a separate and independent feed pipe (4) is provided. All pipes (4) have the same diameter and roughly the same length with an equal number of bends. Each of them is provided with devices (8, 9) to blow in possibly liquid under a high pression to unclog the outlets, all the pipes having basically the same loss of pressure. The pressure loss in feed pipes (4) should be higher, 5 to 20 times, possibly 8 to 12 times, than the pressure loss suffered by the air when passing through the biomass.

2. Airing device, according to point 1, characterized by the fact that wiretap (7) is provided to connect the different feed pipes (4) to the manifold (5).

3. Airing device, according to one or several previous claims, characterized by the fact that the air pressure in feed pipes (4) is adjusted by the proper devices in the manifold (5) to which feed pipes are connected, the feed pipes (4) and possibly the manifold (5) being divided into groups under different air pressures and volumes according to the state of the biomass maturing.

4. Airing device, according to one or several previous claims, characterized by the fact that an air distribution outlet consists of the free end of each feed pipe (4°, appearing at the bottom (3) of the basin.

FIG.1

FIG.2